(19) **Europäisches Patentamt**
**European Patent Office**
**Office européen des brevets**

(11) **EP 1 745 336 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(21) Anmeldenummer: 05748398.4

(22) Anmeldetag: **21.04.2005**

(51) Int Cl.:
***G05B 19/19*** *(2006.01)*

(86) Internationale Anmeldenummer:
**PCT/DE2005/000729**

(87) Internationale Veröffentlichungsnummer:
**WO 2005/111747 (24.11.2005 Gazette 2005/47)**

(54) **SCHALTUNGSANORDNUNG UND VERFAHREN ZUR ELEKTRISCHEN STEUERUNG UND/ODER REGELUNG DER BEWEGUNG EINES ELEKTRISCH BETRIEBENEN AGGREGATS**

CIRCUIT ARRANGEMENT AND METHOD FOR ELECTRICALLY CONTROLLING AND/OR REGULATING THE MOVEMENT OF AN ELECTRICALLY DRIVEN UNIT

ENSEMBLE CIRCUIT ET PROCEDE POUR COMMANDER ET/OU REGULER ELECTRIQUEMENT LE MOUVEMENT D'UNE UNITE COMMANDEE ELECTRIQUEMENT

(84) Benannte Vertragsstaaten:
**DE ES FR GB IT SE**

(30) Priorität: 08.05.2004 DE 102004022805
12.04.2005 DE 102005016893

(43) Veröffentlichungstag der Anmeldung:
**24.01.2007 Patentblatt 2007/04**

(73) Patentinhaber: **Conti Temic microelectronic GmbH**
**90411 Nürnberg (DE)**

(72) Erfinder:
• **ÖXLE, Thomas**
**88677 Markdorf (DE)**
• **SCHULTER, Wolfgang**
**88709 Meersburg (DE)**

(56) Entgegenhaltungen:
**DE-A1- 10 149 578       DE-A1- 19 751 676**

**Beschreibung**

Die Erfindung betrifft eine Schaltungsanordnung zur elektrischen Steuerung und/oder Regelung der Bewegung eines elektrisch betriebenen Aggregats, z. B. eines elektrisch angetriebenen Verstellantriebs in einem Fahrzeug. Des Weiteren betrifft die Erfindung ein Verfahren zur elektrischen Steuerung und/oder Regelung der Bewegung eines elektrisch betriebenen Aggregats. Das Verfahren und die Schaltungsanordnung beziehen sich insbesondere auf die Erkennung von Einklemmsituationen bei elektrisch angetriebenen Verstellantrieben in Kraftfahrzeugen wie z.B. Fensterheber, Schiebedächer oder Sitzverstelleinrichtungen.

Für solche Verstellantriebe gibt es diverse Vorschriften und Richtlinien, z.B. die 74/60/EWG der Europäischen Union, die EC21 von der UNECE (United Nations Economic Commission for Europe), die FMVSS118 von der amerikanischen National Highway Traffic Safty Administration und andere. All diese Vorschriften fordern unter bestimmten Betriebs- und Prüfbedingungen eine Begrenzung der Einklemmkraft auf maximal 100 Newton.

Aus der DE 44 42 171 A1 ist ein Verfahren bekannt, bei dem zur Erkennung von Einklemmsituationen die Betriebsparameter des elektrischen Motors kontinuierlich zu zeitlich äquidistanten Messzeitpunkten erfasst werden und daraus die Verstellkraft ermittelt wird.

Üblicherweise werden bei Verstellantrieben in Kraftfahrzeugen bürstenkommutierte Gleichstrommotoren mit zwei magnetischen Polen eingesetzt. Durch die Kommutierung entstehen auf dem Motorstromsignal so genannte Stromrippels. Bei jeder Stromwendung (Kommutierung) entsteht ein Rippel.

Die Bordnetzspannung eines Kraftfahrzeuges weist darüber hinaus bei bestimmten Betriebsbedingungen ebenfalls Wechselanteile auf. Diese Wechselanteile der Motorspannung bewirken zusätzliche Wechselanteile im Motorstrom.

Es entspricht dem allgemeinen Stand der Technik, dass ein kontinuierliches Signal vor der zeitlich äquidistanten Abtastung mit einem Tiefpass gefiltert wird, dessen Grenzfrequenz unterhalb der halben Abtastfrequenz liegt. Dies ist nach dem allgemein bekannten Abtasttheorem von Shannon erforderlich, um so genannte Aliasing-Effekte zu verhindern. Die Nutzahl der eingesetzten Motoren liegt üblicherweise im Bereich 8 bis 12. Bei einem 10-nutigen Motor entstehen somit 10 Stromrippels pro Umdrehung. Auf dem Motorstromsignal überlagert sich somit ein Wechselstromsignal mit einer Frequenz von 10 Mal Drehzahl. Die Drehzahl des Rotors liegt je nach Belastung und Betriebsspannung typischerweise in einem Bereich zwischen 10 und 80 Umdrehungen pro Sekunde. Somit liegen die durch die Stromwendung verursachten Wechselanteile im Motorstrom im Frequenzbereich zwischen 100 und 800 Hz.

Die durch Einklemmsituationen verursachten Änderungen des Motorstroms liegen typischerweise in einem Frequenzbereich kleiner 20 Hz.

Die durch die Stromwendung verursachten Anteile werden üblicherweise mit Hilfe einer Tiefpassanordnung unterdrückt. Durch diese Tiefpassanordnung werden auch die höherfrequenten Anteile der durch Bordnetzwelligkeiten verursachten Wechselanteile im Motorstrom unterdrückt. Um z.B. die Stromwelligkeiten bei 100 Hz stark genug zu dämpfen, muss die Grenzfrequenz des Tiefpassfilters deutlich unter 100 Hz gewählt werden.

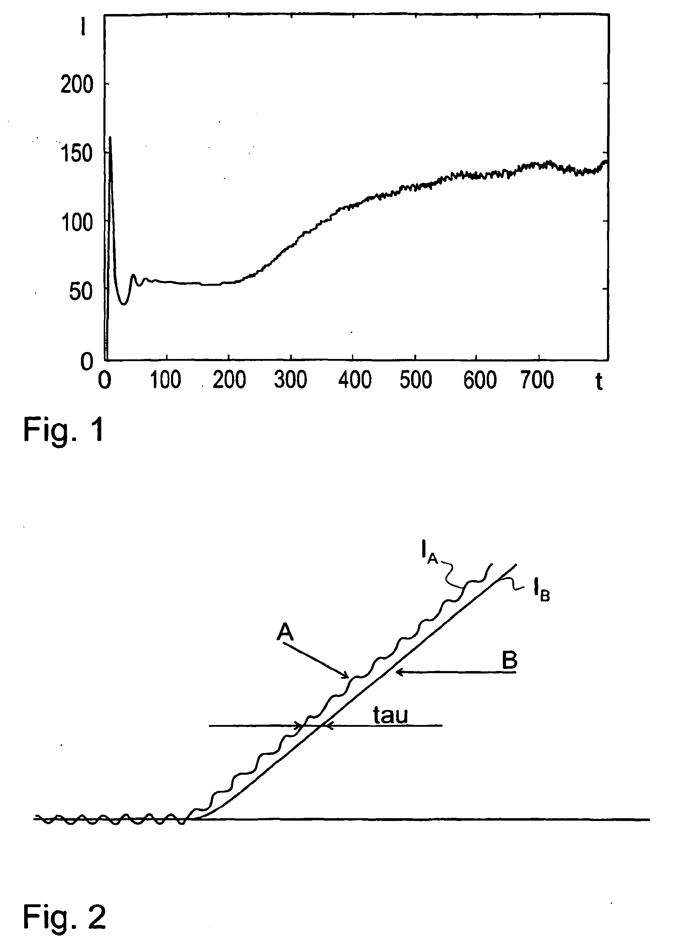

Bei einem Einklemmfall kommt es zu einem Anstieg der Verstellkraft und dadurch zu einem Anstieg des Motorstroms. Durch die Tiefpassfilterung kommt es, wie in Figur 2 gezeigt, zu einem verzögerten Anstieg des gefilterten Stroms und dadurch letztendlich zu einer verzögerten Erkennung von Einklemmfällen und dadurch zu höheren Klemmkräften.

So ist beispielsweise auch aus der DE 10149578 eine Schaltungsanordnung zur Steuerung eines Fensterhebers mit Einklemmschutz zu entnehmen, bei welcher der zeitliche Verlauf dort des Drehmoments des Antriebsmotors erfasst, gefiltert und mit einem Einklemmschwellwert verglichen wird.

Da die Wechselanteile unter bestimmten Betriebsbedingungen sehr groß sind, wird üblicherweise die Unterdrückung im Frequenzbereich der störenden Wechselanteile sehr groß gewählt. Dies wird entweder durch entsprechend niedrige Grenzfrequenzen oder durch entsprechend hohe Filterordnungen realisiert. Niedrige Grenzfrequenzen und hohe Filterordnungen haben aber den Nachteil der erhöhten Verzögerungszeit.

Aufgabe der Erfindung ist es daher, ein Verfahren und eine Schaltungsanordnung anzugeben, durch welche die Einklemmerkennung verbessert wird.

Hinsichtlich der Schaltungsanordnung wird die Aufgabe erfindungsgemäß durch die Merkmale des Anspruchs 1 gelöst. Hinsichtlich des Verfahrens wird die Aufgabe erfindungsgemäß durch die Merkmale des Anspruchs 13 gelöst. Vorteilhafte Weiterbildungen der Erfindung sind Gegenstand der Unteransprüche.

So wird eine Schaltungsanordnung zur elektrischen Steuerung und/oder Regelung der Bewegung eines elektrisch betriebenen Aggregats, insbesondere eines Fensterhebers oder Schiebedachs eines Kraftfahrzeugs, mit einem Einklemmschutzsystem vorgeschlagen, bei dem eine Korrelationsgröße für die Verstellkraft des Aggregats gemessen und zwecks eines Einklemmschutzes eine Abschaltung oder Reversierung einer Verstellbewegung des Aggregats erfolgt, sofern die Korrelationsgröße für die Verstellkraft einen Grenzwert überschreitet, welcher einer vorgegebenen Einklemmkraft entspricht, wobei zur Filterung der Korrelationsgröße für die Verstell kraft des Aggregats ein Filter vorgesehen ist, der zur zeitweisen Filterung der Korrelationsgröße anhand von mindestens einem Filterparameter steuerbar ist. Durch die Steuerung des Filters mittels eines oder mehrerer Filterparameter kann die Korrelationsgröße zeitweise gefiltert werden. Der steuerbare Filter kann dabei mittels eines Signals aktiviert oder deaktiviert werden. Dabei wird ein Wechselsignalanteil von der gemessenen Korrelationsgröße und/oder einer anderen dazu proportionalen Kenngröße ermittelt und in Abhängigkeit von diesem Wechselsignalanteil ist der Filterparameter steuerbar. Dazu ist zweckmäßigerweise eine Filteranordnung zur Ermittlung eines Wechselsignalanteils der Korrelationsgröße, insbesondere des Motorstromsignals und/oder des Motorspannungssignals und/oder des Bordnetzspannungssignals, vorgesehen.

In einer bevorzugten Ausführungsform der Schaltungsanordnung sind als Filterparameter die Grenzfrequenz und/oder eine Ordnung des Filters steuerbar. Dadurch können je nach Betriebs- und Messbedingungen die Dämpfung des Filters situationsbedingt verbessert und zudem bei entsprechenden Betriebs- und Messbedingungen andererseits die Reaktionszeit zur Erkennung von Einklemmfällen herabgesetzt werden. Die Ordnung eines Filters beschreibt die Verstärkungsabnahme von Frequenzen oberhalb oder unterhalb der jeweiligen Grenzfrequenz des Filters. Sie ist beispielsweise n*20dB pro Frequenzdekade, wobei n die Ordnung des Filters darstellt. Filter höherer Ordnung können dabei entweder genuin erstellt oder durch Hintereinanderschaltung von Filtern niedriger Ordnung (1. und 2. Ordnung) realisiert werden.

Vorteilhafterweise umfasst die Filteranordnung einen Wechselsignalfilter, insbesondere einen Wechselstromfilter und/oder einen Wechselspannungsfilter, zur Filterung des zugehörigen Wechselsignalanteils. Insbesondere ist ein Wechselstromsignalfilter als Hochpassanordnung oder Bandpassanordnung ausgeführt.

Darüber hinaus kann die Filteranordnung einen weiteren Filter, insbesondere einen Stromfilter, z. B. einen Tiefpass- und/oder einen Bandpass-Filter, umfassen.

Das Ausgangssignal des Wechselsignalfilters wird anschließend einem Intensitätsmesser zugeführt, dessen Ausgangssignal wiederum einer Arithmetikeinheit, insbesondere einer Verarbeitungseinheit zugeführt wird. Zum Vergleich der Größe des Ausgangssignals des Wechselsignalfilters mit weiteren Größen wird der Verarbeitungseinheit ein Drehzahlsignal des Rotors zugeführt. Zusätzlich kann der Verarbeitungseinheit auch ein die Intensität der Bordnetzwelligkeit kennzeichnendes Signal zugeführt werden.

Mit anderen Worten: Der Filterparameter kann in Abhängigkeit von der die Intensität des Wechselstromanteils kennzeichnenden Größe und/oder von der die Intensität der Bordnetzwelligkeit kennzeichnenden Größe und/oder von der die Rotordrehzahl kennzeichnenden Größe eingestellt werden. Dabei wird der Filterparameter derart eingestellt, dass die Phasenlaufzeit für niederfrequente Signalanteile des Motorstromsignals möglichst gering ist und dabei störende Wechselanteile im Motorstromsignal soweit abgeschwächt werden, dass sie sich bei der nachfolgenden Verstellkraftermittlung nicht störend auswirken. Dadurch können insbesondere bei schnellen Verstellgeschwindigkeiten niedrigere Klemmkräfte erzielt werden. Des Weiteren lassen sich bei der Klemmung von sehr harten Objekten niedrigere Klemmkräfte erreichen.

Vorzugsweise wird für die Erzeugung einer die Intensität der Bordnetzwelligkeit kennzeichnenden Größe die Fahrzeuggeschwindigkeit verwendet. Alternativ oder zusätzlich kann der Zustand der Zündung des Kraftfahrzeugs und/oder das Vorhandensein des Zündschlüssels im Zündschloss, der Zustand des Antriebsmotors des Kraftfahrzeugs und/oder das Drehzahlsignal des Antriebsmotors des Kraftfahrzeugs für die Erzeugung einer die Intensität der Bordnetzwelligkeit kennzeichnenden Größe verwendet werden.

Die Erfindung wird nachfolgend anhand von Ausführungsbeispielen und Figuren näher beschrieben. Es zeigen:

Figur 1     einen zeitlichen Verlauf eines Motorstromsignals. Zu Beginn der Aufzeichnung ist der Motor gering belastet,

Figur 2     einen zeitlichen Verlauf des Motorstromsignals bei einem Einklemmfall (Signal A) sowie den zeitlichen Verlauf des mit einem Tiefpass erster Ordnung gefilterten Motorstromsignals (Signal B) bei einem Einklemmfall,

Figur 3     einen Verlauf der Verzögerungszeit in Abhängigkeit von der Änderung der Grenzfrequenz des Filters,

Figur 4     schematisch eine Schaltungsanordnung zur Steuerung und/oder Regelung des Aggregats, z. B. eines Verstellmotors,

Figur 5     schematisch eine alternative Ausführungsform für eine Schaltungsanordnung zur Steuerung und/oder Regelung eines Aggregats mit einer aus der Stromwelligkeit ermittelten Rotordrehzahl,

Figur 6     schematisch im Detail die Stromfilterung der Schaltungsanordnung nach Figur 4 bzw. nach Figur 5, und

Figur 7     schematisch im Detail die Ermittlung der Bordnetzwelligkeit der Schaltungsanordnung nach Figur 4 bzw. Figur 5.

Einander entsprechende Teile sind in allen Figuren mit den gleichen Bezugszeichen versehen.

Figur 1 zeigt einen zeitlichen Verlauf eines Motorstromsignals I eines Aggregats, z. B. eines Verstellmotors für einen Fensterheber oder ein Schiebedach bei geringer Belastung. Zu Beginn der Aufzeichnung ist der Motor gering belastet. Während der Aufzeichnung steigt die Belastung kontinuierlich an. Man erkennt die mit steigender Belastung zunehmende Stromwelligkeit.

Figur 2 zeigt einen zeitlichen Verlauf des Motorstromsignals $I_A$ bei einem Einklemmfall (Signal A) sowie den zeitlichen Verlauf des mit einem Tiefpass erster Ordnung gefilterten Motorstromsignals $I_B$ (Signal B) bei einem Einklemmfall. Man erkennt den durch die Filterung verursachten zeitlich verzögerten Anstieg des gefilterten Motorstromsignals $I_B$.

Der Filter erster Ordnung wird durch die Übertragungsfunktion H definiert gemäß:

$$H(f) = \frac{k}{1 + j\frac{f}{fg}} \qquad . \qquad [1]$$

mit k = Proportionalitätsfaktor, fg = Grenzfrequenz.

Die eingezeichnete Verzögerungszeit $\tau$ lässt sich durch folgende Formel berechnen:

$$\tau = \frac{1}{2 * \pi * fg} \qquad [2]$$

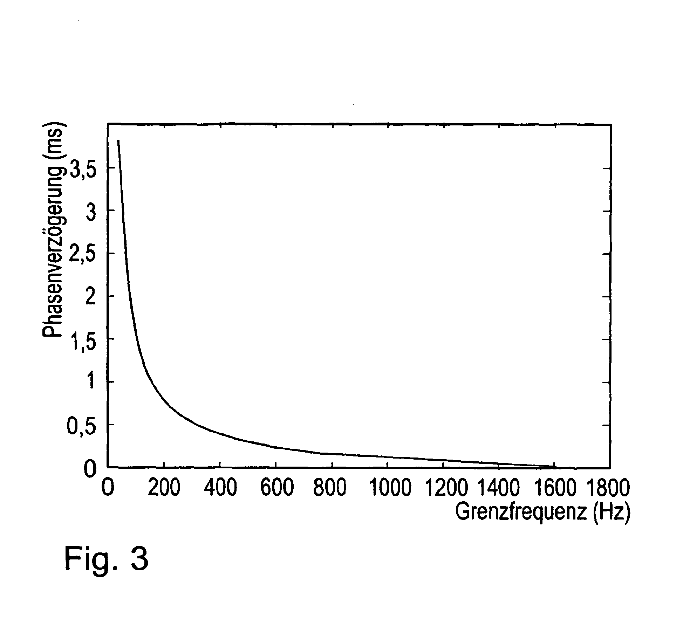

Figur 3 zeigt einen Verlauf der Verzögerungszeit $\tau$ in Abhängigkeit von der Änderung der Grenzfrequenz fg des Filters. Dabei wurde die Grenzfrequenz fg des als Tiefpassfilter ausgebildeten Filters variiert und die Verzögerungszeit $\tau$ aufgezeichnet. Das Diagramm zeigt, dass durch die Erhöhung der Grenzfrequenz fg die Verzögerungszeit $\tau$ und somit die Phasenverzögerung kleiner wird.

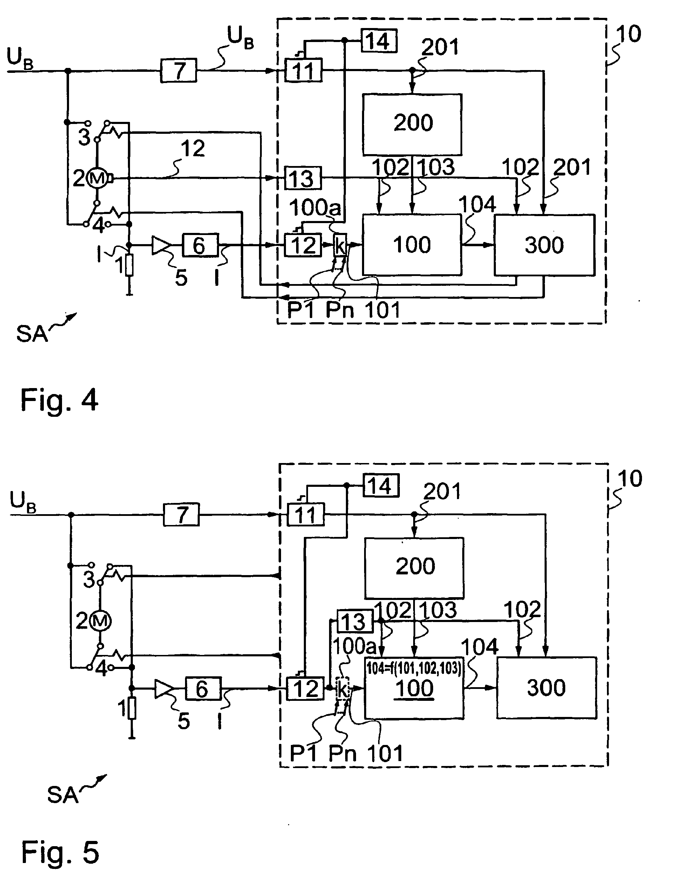

Figur 4 zeigt schematisch eine Schaltungsanordnung SA zur Steuerung und/oder Regelung eines Aggregats 2, z. B. eines Antriebsmotors oder Verstellmotors M. Die als Blockdiagramm dargestellte Antriebssteuerung umfasst darüber hinaus zur Erfassung des Motorstromsignals I eine Erfassungseinheit 1, insbesondere einen Widerstand zur Erfassung des Motorstromsignals I des Aggregats 2. Zur Motoransteuerung des Aggregats 2 sind zwei Relais 3 und 4 vorgesehen.

Zur Berücksichtigung der Korrelationsgröße K bei der Ermittlung der Verstellkraft des Aggregats 2 ist ein Verstärker 5, insbesondere ein Signalverstärker zur Verstärkung des Eingangssignals, d.h. des Motorstroms I, vorgesehen. Zur Vermeidung von Aliasing-Effekten bei einer nachgeschalteten Abtastung des Motorstromsignals I ist dem Verstärker 5 ein Tiefpass 6 nachgeschaltet.

Neben dem Motorstrom I wird mittels der Schaltungsanordnung SA auch die Bordnetzspannung $U_B$ erfasst. Zur Vermeidung von Aliasing-Effekten bei der nachgeschalteten Abtastung der Bordnetzspannung $U_B$ ist ein Tiefpass 7 vorgesehen.

Die Bordnetzspannung $U_B$ und das Motorstromsignal I werden anschließend einer Antriebssteuerung 10 der Schaltungsanordnung SA zur Steuerung und/oder Regelung des Aggregats 2 zugeführt. Zusätzlich oder alternativ kann die Drehzahl n des Aggregats 2 erfasst und der Antriebssteuerung 10 zugeführt werden.

Die Antriebssteuerung 10 umfasst zur Abtastung der erfassten Signale, d.h. der Bordnetzspannung $U_B$ und/ oder des Motorstroms I, jeweils ein zugehöriges Abtastglied 11 bzw. 12. Zur Abtast-Takterzeugung ist des Weiteren ein Taktgenerator 14 vorgesehen, der mit den Abtastgliedern 11 und 12 verbunden ist. Zur Erfassung der Drehzahl n des Aggregats 2 umfasst die Antriebssteuerung 10 eine Erfassungseinheit 13.

Zur Bestimmung der Verstellkraft des Aggregats 2 umfasst die Antriebssteuerung 10 zum einen eine Filteranordnung 100 und eine dieser nachgeschalteten Verstelleinrichtung 300 zur Erkennung einer Einklemmsituation, insbesondere zur Verstellkraftermittlung und einer entsprechenden Steuerung des Aggregats 2. Zum anderen ist zur Bestimmung der Wechselsignalanteile der Bordnetzspannung $U_B$ das Abtastglied 11 mit einer weiteren Erfassungseinheit 200 zur Ermittlung der Bordnetzspannungswelligkeit verbunden. Dabei dient die Filteranordnung 100 der Filterung der Korrelationsgröße K, insbesondere des Motorstromsignals I und somit der Stromfilterung zur Unterdrückung von Wechselsignalanteilen, die durch Stromwendung und Bordnetzstörungen verursacht werden. Die Filteranordnung 100 ist zwischen den Erfassungseinheiten 1, 13 und/oder 200 und der Verstelleinrichtung 300 geschaltet.

Je nach Art und Ausbildung der Antriebssteuerung 10 kann der Filteranordnung 100 ein weiteres Modul 100a zur Bildung und Ermittlung der Korrelationsgröße K vorgeschaltet sein. Beispielsweise kann die Korrelationsgröße K auch anhand mindestens einer der nachfolgenden oder anhand von mehreren Parametern P1 bis Pn bestimmt werden. Als Parameter P1 bis Pn dienen beispielsweise die Bordnetzspannung $U_B$, der elektrische Widerstand und/oder die Induktivität des Aggregats 2, die Temperatur und/oder eine Maschinenkonstante des Aggregats 2, der magnetische Fluss und/oder eine Kennlinie des Aggregats 2. Eine derart indirekt ermittelte Korrelationsgröße K wird als ungefilterte Korrelationsgröße 101 der Filteranordnung 100 zugeführt.

Im Betrieb der Antriebssteuerung 10 wird der Erfassungseinheit 200 zur Ermittlung der Bordnetzspannungswelligkeit und der Verstelleinrichtung 300 die Bordnetzspannung $U_B$ als abgetastetes Bordspannungssignal 201 zugeführt. Die Erfassungseinheit 200 ermittelt anhand des Bordspannungssignals 201 und/oder weiterer Betriebssignale, z. B. Zustand der Zündung, des Fahrzeug-Antriebsmotors, der Drehzahl des Fahrzeug-Antriebsmotors und/oder der Fahrgeschwindigkeit, ein die Intensität der Wechselspannungsanteile kennzeichnendes Signal 103, das der Filteranordnung 100 zugeführt wird.

Eine die Drehzahl n des Rotors oder Aggregats 2 kennzeichnende Größe 102 wird ebenfalls der Filteranordnung 100 zugeführt. Anhand der die Drehzahl n kennzeichnenden Größe 102 und des die Intensität der Wechselspannungsanteile kennzeichnenden Signals 103 sowie anhand des abgetasteten Motorstromsignals I und der daraus resultierenden ungefilterten Korrelationsgröße 101 wird mittels der Filteranordnung 100 ein Steuersignal 104 bestimmt, dass der Verstelleinrichtung 300 zur Erkennung einer Einklemmsituation des Aggregats 2 zugeführt wird. Die Filteranordnung 100 ist somit steuerbar, d.h. die Grenzfrequenz und/oder die Ordnung der Filteranordnung 100 werden in Abhängigkeit von den der Filteranordnung 100 zugeführten Signale 101, 102 und/oder 103 bestimmt.

Figur 5 zeigt eine alternative Ausführungsform für eine Schaltungsanordnung SA zur Steuerung und/oder Regelung eines Aggregats 2 mit einer aus der Stromwelligkeit ermittelten Rotordrehzahl n. Dabei wird die Drehzahl n des Aggregats 2 mittels der Erfassungseinheit 13 aus der Stromwelligkeit des Motorstromsignals I ermittelt. Hierzu ist die Erfassungseinheit 13 eingangsseitig mit dem Ausgang des Abtastglieds 12 für das abgetastete Motorstromsignal 101 verbunden.

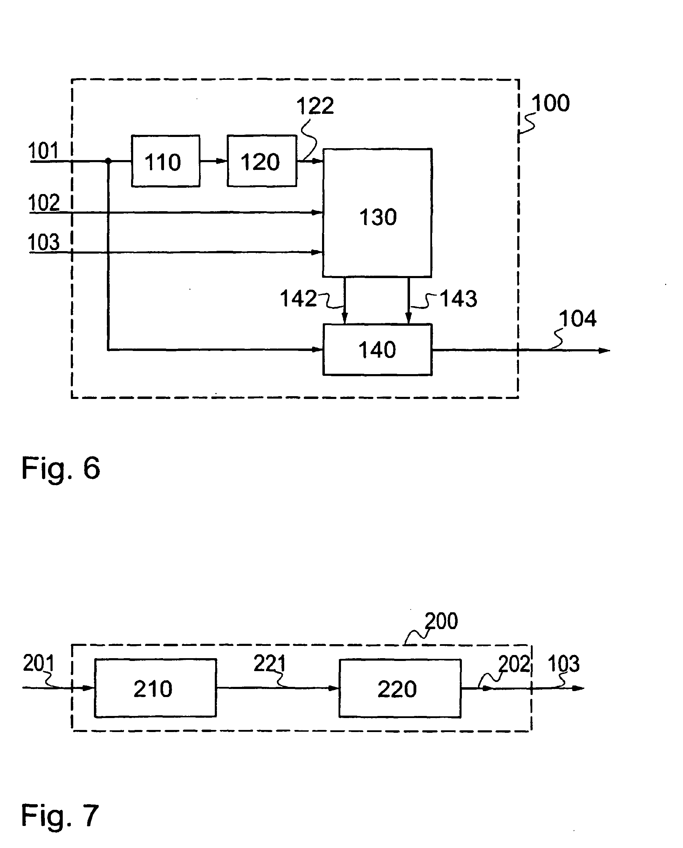

In Figur 6 ist im Detail die Filteranordnung 100 zur Filterung der ungefilterten Korrelationsgröße 101 dargestellt. Der Filteranordnung 100 wird als ungefilterte Korrelationsgröße 101 beispielsweise das Motorstromsignals I, insbesondere das abgetastete Motorstromsignal I oder eine anhand der Parameter P1 bis Pn, z. B. der Bordnetzspannung $U_B$, des elektrischen Widerstands, der Induktivität und/oder der Temperatur und/oder anderer Parameter des Aggregats, ermittelte Korrelationsgröße K zugeführt. Darüber hinaus wird der Filteranordnung 100 ein die Drehzahl n des Rotors oder Aggregats 2 kennzeichnendes Signal 102 und/oder das die Intensität der Wechselspannungsanteile der Bordnetzspannung $U_B$ kennzeichnende Signal 103 zugeführt.

Das abgetastete Motorstromsignal 101 wird beispielsweise direkt als Korrelationsgröße K herangezogen. Hierzu wird das abgetastete Motorstromsignal 101 einem Wechselstromfilter 110 zur Filterung und Bestimmung der Wechselsignalanteile, insbesondere der Wechselstromanteile des abgetasteten Motorstromsignals 101 zugeführt. Der Wechselstromfilter 110 ist beispielsweise ein Hochpass- oder Bandpassfilter. Dem Wechselstromfilter 110 ist ein Intensitätsmesser 120 nachgeschaltet, mittels dessen die Intensität der Wechselstromanteile bestimmt wird. Beispielweise wird zur Ermittlung der Intensität der Wechselstromanteile die Amplitude, z. B. der maximale Wert aus einer bestimmten Anzahl von Eingangswerten, oder eine Funktion, z. B. die gemittelte Leistung oder der Amplitudenmittelwert aus einer bestimmten Anzahl von Eingangswerten, bestimmt. Ausgangsseitig wird eine die Intensität der Wechselstromanteile kennzeichnende Größe einer Verarbeitungseinheit 130, insbesondere einer Arithmetikeinheit, z. B. einem Schwellenvergleicher, zugeführt.

Zur Berücksichtigung weiterer Kenngrößen bei der Ermittlung einer Einklemmsituation wird der Verarbeitungseinheit 130 das die Drehzahl n repräsentierende Signal 102 und das die Intensität der Bordnetzspannungswelligkeit repräsentierende Signal 103 zugeführt.

Diese werden mittels der Verarbeitungseinheit 130 zu mindestens einem Ausgangssignal 142, 143 verarbeitet, das die Grenzfrequenz fg bzw. die Ordnung eines nachgeschalteten Filters 140, insbesondere eines Stromfilters zur Filterung der Korrelationsgröße K, insbesondere des Motorstromsignals I bestimmt. Beispielsweise wird die Grenzfrequenz fg oder die Ordnung des Filters 140 in einem Ausführungsbeispiel auf einen vorgegebenen Wert gesetzt. In einem weiteren Ausführungsbeispiel wird die Grenzfrequenz fg gleich dem die Drehzahl n des Rotors kennzeichnenden Signal 102 gesetzt.

Die mittels des Filters 140 gefilterte Korrelationsgröße K wird anschließend als Signal 104 der Verstelleinrichtung 300 zugeführt. Der Filter 140 ist als Tiefpass- oder Bandpassfilter ausgeführt.

In Figur 7 ist eine Ausführungsform für die Erfassungseinheit 200 zur Ermittlung der Bordnetzspannungswelligkeit dargestellt. Die Erfassungseinheit 200 umfasst einen Wechselspannungsfilter 210 und einen Intensitätsmesser 220. Es wird darauf hingewiesen, dass diese Ausführung der Erfassungseinheit 200 nur eine von den verschiedenen im Patent angegebenen Möglichkeiten ist, um ein die Intensität der Wechselanteile der Bordnetzspannung $U_B$ kennzeichnendes Signal 202 zu erzeugen, das der Filteranordnung 100 als Signal 103 zugeführt wird.

Nachfolgend werden die in den Figuren 4 bzw. 5 mit den Figuren 6 und 7 beschriebenen Schaltungsanordnungen SA im Betrieb näher erläutert.

Ermittlung der Störungen im Motorstrom:

In einem ersten Ausführungsbeispiel werden die Störungen auf dem Motorstromsignal I wie folgt ermittelt. Durch ein Wechselstromfilter 110 werden die störenden Wechselanteile aus dem gemessenen Motorstromsignal 101 extrahiert und aus diesen mittels eines Intensitätsmessers 120 ein die Intensität der Wechselanteile kennzeichnendes Signal 122 generiert. Dieser Intensitätsmesser kann z.B. durch einen Amplitudendetektor realisiert werden, der den maximalen Wert aus einer bestimmten Anzahl von Messwerten ausgibt. Eine andere Möglichkeit ist der Einsatz eines Leistungsmessers, der die über eine bestimmte Anzahl von Messwerten gemittelte Leistung ausgibt. Um zu verhindern, dass während eines Einklemmfalls die Filtercharakteristik nachteilig angepasst wird, ist in einer weiterführenden Ausgestaltung vorgesehen, dass das zur Berechnung herangezogene Motorstromsignal 101 um eine bestimmte Anzahl von Abtastintervallen verzögert wird.

Untersuchungen haben gezeigt, dass die Amplitude des Wechselanteils im Motorstromsignal 101, welche durch die Stromwendung durch die Bürsten im Motor M verursacht wird von der Amplitude des Gleichstromanteils und von der Drehzahl abhängt. Je größer die Amplitude des Gleichstromanteils und je kleiner die Drehzahl des Rotors, desto größer ist die Amplitude des Wechselanteils im Motorstromsignal 101.

Somit wird in einem weiteren Ausführungsbeispiel das die Intensität der Wechselanteile kennzeichnende Signal 122 durch Multiplikation der Amplitude des Gleichstromanteils mit einem Proportionalitätsfaktor k generiert.

In einem weiteren Ausführungsbeispiel wird das die Intensität der Wechselanteile kennzeichnende Signal 122 durch Division eines vorgegebenen Wertes durch die die Drehzahl des Rotors kennzeichnende Größe 102 generiert. Der Vorteil der beiden letztgenannten Ausführungsbeispiele liegt darin, dass kein Wechselstromfilter 110 und kein Leistungsmesser 120 benötigt wird und dadurch eine kostengünstigere Realisierung möglich ist.

Ermittlung der Störungen auf dem Bordnetz:

In einem weiteren Ausführungsbeispiel werden die Störungen auf dem Bordnetz wie folgt ermittelt. Durch ein Wechselspannungsfilter 210 werden die störenden Wechselanteile aus dem gemessenen Bordspannungssignal 201 extrahiert und aus diesen mittels eines Intensitätsmessers 220 ein die Intensität der Wechselspannungsanteile kennzeichnendes Signal 103 generiert. Dieser Intensitätsmesser 220 kann z.B. durch einen Amplitudendetektor realisiert werden, der den maximalen Wert aus einer bestimmten Anzahl von Messwerten ausgibt. Eine andere Möglichkeit ist der Einsatz eines Leistungsmessers, der die über eine bestimmte Anzahl von Messwerten gemittelte Leistung ausgibt. Das zu dieser Berechnung herangezogene Bordspannungssignal 201 wird in einer speziellen Ausgestaltung des Ausführungsbeispiels um eine bestimmte Anzahl von Abtastintervallen verzögert.

Wenn die Zündung eines Kraftfahrzeugs ausgeschaltet ist, sind nur sehr wenige elektrische Systeme aktiv. Durch das Einschalten der Zündung werden zusätzliche elektrische Systeme aktiv. Bei laufendem Motor werden weitere elektrische Systeme wie z.B. elektrisch angetriebene Servolenkung aktiv. Alle diese elektrischen Systeme können Schwankungen der Bordnetzspannung verursachen. Während das Kraftfahrzeug fährt, können Systeme wie z.B. elektrische Fahrwerksregelungen zusätzliche Schwankungen der Bordnetzspannung verursachen. Somit kann man vom Zustand der Zündung und/oder dem Zustand des Antriebsmotors M und/oder der Fahrzeuggeschwindigkeit auf die möglicherweise auftretenden Bordnetzschwankungen schließen. Die Erzeugung eines die Intensität der Wechselspannungsanteile kennzeichnende Signal 103 in Abhängigkeit von dem Zustand der Zündung und/oder dem Zustand des Antriebsmotors M und/oder der Fahrzeuggeschwindigkeit und/oder der Drehzahl des Antriebsmotors M bringt den Vorteil, dass das Wechselspannungsfilter 210 und der Intensitätsmesser 220 entfallen können und dadurch eine kostengünstigere Realisierung möglich ist.

In einem weiteren Ausführungsbeispiel wird daher das die Intensität der Wechselspannungsanteile kennzeichnende Signal 103 vom Zustand der Zündung beeinflusst. Im Zustand Zündung "EIN" wird das die Intensität der Wechselspannungsanteile kennzeichnende Signal 103 um einen vorbestimmten Wert Z erhöht.

In einem weiteren Ausführungsbeispiel wird das die Intensität der Wechselspannungsanteile kennzeichnende Signal 103 vom Zustand des Antriebsmotors M des Kraftfahrzeugs beeinflusst. Im Zustand "Motor läuft" wird das die Intensität der Wechselspannungsanteile kennzeichnende Signal 103 um einen vorbestimmten Wert m erhöht.

In einem weiteren Ausführungsbeispiel wird das die Intensität der Wechselspannungsanteile kennzeichnende Signal 103 von der Fahrzeuggeschwindigkeit des Kraftfahrzeugs beeinflusst. Liegt die Geschwindigkeit des Fahrzeugs oberhalb einer bestimmten Schwelle, dann wird das die Intensität der Wechselspannungsanteile kennzeichnende Signal 103 um einen vorbestimmten Wert g erhöht.

In einem weiteren Ausführungsbeispiel wird das die Intensität der Wechselspannungsanteile kennzeichnende Signal 103 durch Multiplikation der Fahrzeuggeschwindigkeit mit einem Proportionalitätsfaktor berechnet.

Ermittlung der die Drehzahl des Rotors kennzeichnenden Größe:

Es wird darauf hingewiesen, dass es im Rahmen der Erfindung liegt die Drehzahl n des Rotors aus der durch die Stromwendung verursachten Stromwelligkeit zu bestimmen, wie es aus der DE 197 29 238 bekannt ist. In einem anderen Ausführungsbeispiel wird die Drehzahl n des Rotors mit Sensoren erfasst, die eine Impulsfolge ausgeben, deren Periodendauer mit der Drehzahl n korreliert. Solch ein Sensor kann z.B. ein Hallsensor sein, der den magnetischen Fluss eines auf der Rotorachse angeordneten Magnetpolrades erfasst.

Berechnung der Grenzfrequenz:

Das die Intensität der Wechselstromanteile kennzeichnende Signal 122, das die Intensität der Wechselspannungsanteile kennzeichnende Signal 103 und/oder das die Drehzahl n des Rotors kennzeichnende Signal 102 werden der Verarbeitungseinheit 130 zugeführt.

In der Verarbeitungs- oder Arithmetik-Einheit 130 wird aus dem die Intensität der Wechselstromanteile kennzeichnenden Signal 122 und/oder dem die Intensität der Wechselspannungsanteile kennzeichnenden Signal (103) und/oder dem die Drehzahl n des Rotors kennzeichnenden Signal (102) das Ausgangssignal 142 bzw. 143 berechnet, welches die Grenzfrequenz fg des Stromfilters 140 bestimmt.

In einem Ausführungsbeispiel wird die Grenzfrequenz fg des Stromfilters 140 auf einen fest vorbestimmten Wert gesetzt. In einem weiteren Ausführungsbeispiel wird die Grenzfrequenz fg des Stromfilters 140 gleich dem die Drehzahl n des Rotors kennzeichnenden Signal 102 gesetzt. Dadurch werden die Anteile, die durch die Stromwendung verursacht werden unterdrückt. Der entscheidende Vorteil dieser Ausführung liegt darin, dass bei höheren Drehzahlen n und somit höheren Verstellgeschwindigkeiten die Phasenverzögerung durch das Stromfilter 140 geringer ist als bei niedrigeren Drehzahlen. Bei höheren Verstellgeschwindigkeiten bewirken Verzögerungen eine höhere Klemmkraft als bei kleineren Verstellgeschwindigkeiten.

In einem weiteren Ausführungsbeispiel wird zur Berechnung der Grenzfrequenz fg das die Drehzahl n des Rotors kennzeichnende Signal 102 oder ein fest vorbestimmter Wert mit einem Korrekturfaktor multipliziert. Dieser Korrekturfaktor wird durch eine der folgenden Formeln berechnet:

Korrekturfaktor = vorbestimmter Wert / Intensität der Wechselstromanteile kennzeichnendes Signal 122 oder

Korrekturfaktor = vorbestimmter Wert / Intensität der Wechselspannungsanteile kennzeichnende Signal 103.

Dadurch kann in den Fällen, bei denen die Wechselanteile im Motorstromsignal I und auf der Bordnetzspannung $U_B$ klein sind, eine weitere Reduzierung der Phasenverzögerung und dadurch eine weitere Verringerung der Klemmkräfte erreicht werden.

Üblicherweise wird eine Filteranordnung 140 mit ein oder mehreren Filtern mit sehr geringer Filterordnung eingesetzt. Durch die Erhöhung der Grenzfrequenz fg werden die Wechselstromanteile zwar weniger gedämpft aber dennoch soweit abgeschwächt, dass sie sich nicht störend auf die Verstellkraftermittlung auswirken. Die Erhöhung der Grenzfrequenz fg bringt den entscheidenden Vorteil, dass die Phasenverzögerung des Tiefpassfilters geringer wird und somit Einklemmkräfte schneller erkannt werden und somit geringere Klemmkräfte erzielt werden können.

Berechnung der Filterordnung:

Des Weiteren wird in der Verarbeitungs- oder Arithmetik-Einheit 130 aus dem die Intensität der Wechselstromanteile kennzeichnenden Signal 122 und/oder dem die Intensität der Wechselspannungsanteile kennzeichnenden Signal 103 und/oder dem die Drehzahl n des Rotors kennzeichnenden Signal 102 das Ausgangssignal 143 berechnet, welches die Filterordnung des Stromfilters 140 bestimmt.

In einem Ausführungsbeispiel wird die Ordnung des Stromfilters 140 auf einen vorbestimmten Wert gesetzt, z.B. auf 1. In einem weiteren Ausführungsbeispiel wird die Ordnung des Stromfilters 140 durch Multiplikation eines vorbestimmten Wertes mit dem die Intensität der Wechselstromanteile kennzeichnenden Signal 122 berechnet.

In einem weiteren Ausführungsbeispiel wird die Ordnung des Stromfilters 140 durch Multiplikation eines vorbestimmten Wertes mit dem die Intensität der Wechselspannungsanteile kennzeichnenden Signal 103 berechnet.

In einem weiteren Ausführungsbeispiel wird die Ordnung des Stromfilters 140 durch Multiplikation eines vorbestimmten Wertes mit dem die Drehzahl n des Rotors kennzeichnenden Signal 102 berechnet.

In einem weiteren Ausführungsbeispiel wird die Ordnung des Stromfilters 140 durch Division eines vorbestimmten Wertes durch das die Drehzahl des Rotors kennzeichnende Signal 102 berechnet.

Ausführung des Stromfilters 140:

Das Stromfilter 140 wird in einem Ausführungsbeispiel als rekursives digitales Filter mit der Übertragungsfunktion:

$$H(z) = \frac{Y(z)}{X(z)} = \frac{\sum_{\mu=0}^{m} b_{\mu} * z^{-\mu}}{\sum_{\nu=0}^{n} a_{\nu} * z^{-\nu}} \qquad [3]$$

realisiert.

Die Filtercharakteristik und Grenzfrequenz fg wird hierbei über die Koeffizienten $a_{\nu}$ und $b_{\mu}$ eingestellt. Die Filterordnung wird über n und m festgelegt.

Die Koeffizienten $a_{\nu}$ und $b_{\mu}$ können entweder aus der einzustellenden Grenzfrequenz fg und der vorgegebenen Filterordnung berechnet werden oder über Tabellen eingestellt werden.

In einem weiteren Ausführungsbeispiel wird das Stromfilter 140 als nicht-rekursives digitales Filter mit der Übertragungsfunktion:

$$H(z) = \sum_{\mu=0}^{m} b_{\mu} * z^{-\mu} \qquad [4]$$

realisiert.

Die Filtercharakteristik und Grenzfrequenz fg wird hierbei über die Koeffizienten $b_{\mu}$ eingestellt. Die Filterordnung wird mit m festgelegt.

Die Koeffizienten $b_{\mu}$ können entweder aus der einzustellenden Grenzfrequenz fg und der vorgegebenen Filterordnung berechnet werden oder über Tabellen eingestellt werden.

## Patentansprüche

1. Schaltungsanordnung (SA) zur elektrischen Steuerung und/oder Regelung der Bewegung eines elektrisch betriebenen Aggregats (2), insbesondere eines Fensterhebers oder Schiebedachs eines Kraftfahrzeugs, mit einem Einklemmschutzsystem, bei dem eine Korrelationsgröße (K) für die Verstellkraft des Aggregats (2) gemessen und zwecks eines Einklemmchutzes eine Abschaltung oder Reversierung einer Verstellbewegung erfolgt, sofern die Korrelationsgröße (K) für die Verstellkraft einen Grenzwert (fg) überschreitet, welcher einer vorgegebenen Einklemmkraft entspricht, wobei ein Filter (140) zur Filterung der Korrelationsgröße (K) für die Verstellkraft des Aggregats (2) vorgesehen ist, wobei
   der Filter (140) anhand von mindestens einem zugehörigen Filterparameter (142, 143) steuerbar ist,
   **dadurch gekennzeichnet, dass** ein Wechselsignalanteil von der gemessenen Korrelationsgröße (K) und/oder einer anderen dazu proportionalen Kenngröße ermittelt und in Abhängigkeit von diesem Wechselsignalanteil der Filterparameter (142, 143) steuerbar ist.

2. Schaltungsanordnung nach Anspruch 1, **dadurch gekennzeichnet, dass** die Intensität des Wechselstromanteils bestimmt und in Abhängigkeit von dieser Intensität des Wechselsignalanteils der Filterparameter (142, 143) steuerbar ist.

3. Schaltungsanordnung nach einem der Ansprüche 1 bis 2, **dadurch gekennzeichnet, dass** eine Filteranordnung (100) zur Ermittlung eines Wechselsignalanteils der Korrelationsgröße (K), insbesondere des Motorstromsignals (I) vorgesehen ist.

4. Schaltungsanordnung nach Anspruch 3, **dadurch gekennzeichnet, dass** die Filteranordnung (100) einen Wechselsignalfilter (110) zur Filterung des Wechselsignalanteils umfasst.

5. Schaltungsanordnung nach Anspruch 4, **dadurch gekennzeichnet, dass** der Wechselsignalfilter (110), insbesondere ein Wechselstromsignalfilter als Hochpassanordnung ausgeführt ist.

6. Schaltungsanordnung nach Anspruch 4 oder 5, **dadurch gekennzeichnet, dass** das Wechselsignalfilter (110) als Bandpassanordnung ausgeführt ist.

7. Schaltungsanordnung nach einem der Ansprüche 3 bis 6, **dadurch gekennzeichnet, dass** die Filteranordnung (100) einen weiteren Filter, insbesondere einen Stromfilter (140) umfasst.

8. Schaltungsanordnung nach einem der Ansprüche 4 bis 7, **dadurch gekennzeichnet, dass** das Ausgangssignal des Wechselsignalfilters (110) einem Intensitätsmesser (120) zugeführt wird.

9. Schaltungsanordnung nach Anspruch 8, **dadurch gekennzeichnet, dass** das Ausgangssignal des Intensitätsmesser (120) einer Verarbeitungseinheit (130) zugeführt wird.

10. Schaltungsanordnung nach Anspruch 9, **dadurch gekennzeichnet, dass** ein Drehzahlsignal (n, 102) des Rotors der Verarbeitungseinheit (130) zugeführt wird.

11. Schaltungsanordnung nach Anspruch 9 oder 10, **dadurch gekennzeichnet, dass** ein die Intensität der Bordnetzwelligkeit kennzeichnendes Signal (103) der Verarbeitungseinheit (130) zugeführt wird.

12. Schaltungsanordnung nach einem der vorangehenden Ansprüche 1 bis 11, **dadurch gekennzeichnet, dass** als Filterparameter (142, 143) die zugehörige Grenzfrequenz (fg) und/oder eine Ordnung des Filters (140) gesteuert werden.

13. Verfahren zum Betrieb eines elektrisch betriebenen Aggregats mit einer Schaltungsanordnung (SA) nach einem der vorangehenden Ansprüche 1 bis 11, wobei eine Korrelationsgröße (K) für die Verstellkraft des Aggregats (2) ermittelt wird und zwecks Einklemmtschutzes eine Abschaltung oder Reversierung einer Verstellbewegung des Aggregats (2) erfolgt, sofern die Korrelationsgröße (K) für die Verstellkraft einen Grenzwert überschreitet, welcher einer vorgegebenen Einklemmkraft entspricht, und wobei die Korrelationsgröße (K) in einem Filter (140) gefiltert wird, wobei der Filter (140) anhand von mindestens einem zugehörigen Filterparameter (142, 143) steuerbar ist, **dadurch gekennzeichnet, daß**
ein Wechselsignalanteil von der gemessenen Korrelationsgröße (K) und/oder einer anderen dazu proportionalen Kenngröße ermittelt und in Abhängigkeit von diesem Wechselsignalanteil der Filterparameter (142, 143) steuerbar ist.

14. Verfahren nach Anspruch 13, **dadurch gekennzeichnet, dass** die Grenzfrequenz (fg) des Filters (140) und/oder die Ordnung des Filters (140) steuerbar ist. von der die Rotordrehzahl (n) kennzeichnenden Größe (102) eingestellt wird.

15. Verfahren nach Anspruch 13, **dadurch gekennzeichnet, dass** der Filterparameter (142, 143) in Abhängigkeit von der die Intensität des Wechselstromanteils kennzeichnenden Größe (122), und/oder von der die Intensität der Bordnetzwelligkeit kennzeichnenden Größe (103) und/oder von der die Rotordrehzahl (n) kennzeichnender Größe (102) eingestellt wird.

16. Verfahren nach Anspruch 13 oder 14, **dadurch gekennzeichnet, dass** der Filterparameter (142, 143) derart eingestellt wird, dass die Phasenlaufzeit für niederfrequente Signalanteile des Motorstromsignals (101) möglichst gering sind und dabei störende Wechselanteile im Motorstromsignal (101) soweit abgeschwächt werden, dass sie sich bei der nachfolgenden Verstellkraftermittlung nicht störend auswirken.

17. Verfahren nach einem der Ansprüche 13 bis 15, **dadurch gekennzeichnet, dass** zur Ermittlung der die Intensität des Wechselstromanteils kennzeichnenden Größe (122) die Amplitude oder die Leistung des Ausgangssignals des Wechselsignalfilters (110) verwendet wird.

18. Verfahren nach einem der Ansprüche 13 bis 17, **dadurch gekennzeichnet, dass** zur Ermittlung der die Intensität der Bordnetzwelligkeit kennzeichnenden Größe (103) die Amplitude oder die Leistung des Ausgangssignals eines Wechselspannungsfilters (210) verwendet wird.

19. Verfahren nach einem der Ansprüche 13 bis 18, **dadurch gekennzeichnet, dass** die Fahrzeuggeschwindigkeit für die Erzeugung einer die Intensität der Bordnetzwelligkeit kennzeichnenden Größe (103) verwendet wird.

20. Verfahren nach einem der Ansprüche 13 bis 19, **dadurch gekennzeichnet, dass** der Zustand der Zündung des Kraftfahrzeugs und/oder das Vorhandensein des Zündschlüssels im Zündschloss für die Erzeugung einer die Intensität der Bordnetzwelligkeit kennzeichnenden Größe (103) verwendet werden bzw. wird.

**21.** Verfahren nach einem der Ansprüche 13 bis 20, **dadurch gekennzeichnet, dass** der Zustand des Antriebsmotors des Kraftfahrzeugs und/oder das Drehzahlsignal des Antriebsmotors des Kraftfahrzeugs für die Erzeugung einer die Intensität der Bordnetzwelligkeit kennzeichnenden Größe (103) verwendet werden bzw. wird.

**22.** Verfahren nach einem der Ansprüche 13 bis 21, **dadurch gekennzeichnet, dass** die Rotordrehzahl (n) kennzeichnende Größe (102) durch Frequenzbestimmung der im Motorstromsignal (101) enthaltenen Wechselanteile erfolgt.

**23.** Verfahren nach einem der Ansprüche 13 bis 22, **dadurch gekennzeichnet, dass** zur Ermittlung der Amplitude der maximale Wert aus einer bestimmten Anzahl von Eingangswerten bestimmt wird.

**24.** Verfahren nach einem der Ansprüche 13 bis 23, **dadurch gekennzeichnet, dass** zur Bestimmung der Leistung die gemittelte Leistung aus einer bestimmten Anzahl von Eingangswerten berechnet wird.

## Claims

**1.** A circuit arrangement (SA) for the electrical control and/or regulation of the movement of an electrically driven aggregate (2), in particular a window winder or sliding roof of a motor vehicle, with an anti-jamming system, with which a correlation value (K) is measured for the displacement force of the aggregate (2), and a shutdown or reversal of the displacement movement is conducted for anti-jamming purposes, insofar as the correlation value (K) for the displacement force exceeds a limit value (fg), which corresponds to a specified jamming force, whereby a filter (140) is provided for filtering the correlation values (K) for the displacement force of the aggregate (2), whereby the filter (140) can be controlled using at least one related filter parameter (142, 143), **characterized in that** an alternating signal portion of the measured correlation value (K) and/or another nominal value which is proportionate to this is determined, and depending on this alternating signal portion, the filter parameter (142, 143) can be controlled.

**2.** A circuit arrangement according to claim 1, **characterized in that** the intensity of the alternating current portion is determined, and depending on this intensity of the alternating signal portion, the filter parameter (142, 143) can be controlled.

**3.** A circuit arrangement according to either of claims 1 to 2, **characterized in that** a filter arrangement (100) in order to determine an alternating signal portion of the correlation value (K), in particular of the motor current signal (I), is provided.

**4.** A circuit arrangement according to claim 3, **characterized in that** the filter arrangement (100) comprises an alternating signal filter (110) for filtering the alternating signal portion.

**5.** A circuit arrangement according to claim 4, **characterized in that** the alternating signal filter (110), in particular an alternating current signal filter, is designed as a high pass arrangement.

**6.** A circuit arrangement according to either of claims 4 or 5, **characterized in that** the alternating signal filter (110) is designed as a band pass arrangement.

**7.** A circuit arrangement according to any one of claims 3 to 6, **characterized in that** the filter arrangement (100) comprises a further filter, in particular a current filter (140).

**8.** A circuit arrangement according to any one of claims 4 to 7, **characterized in that** the output signal of the alternating signal filter (110) is fed to an intensity measuring device (120).

**9.** A circuit arrangement according to claim 8, **characterized in that** the output signal of the intensity measuring device (120) is fed to a processing unit (130).

**10.** A circuit arrangement according to claim 9, **characterized in that** a rotational speed signal (n, 102) of the rotor is fed to the processing unit (130).

**11.** A circuit arrangement according to either of claims 9 or 10, **characterized in that** a signal (103) which characterizes the intensity of the on-board network ripple is fed to the processing unit (130).

**12.** A circuit arrangement according to any one of the preceding claims 1 to 11, **characterized in that** the corresponding limit frequency (fg) and/or an order of the filter (140) are controlled as filter parameters (142, 143).

**13.** A method for operating an electrically driven aggregate with a circuit arrangement (SA) according to any one of the preceding claims 1 to 11, whereby a correlation value (K) is determined for the displacement force of the aggregate (2) and for anti-jamming purposes, a shutdown or reversal of a displacement movement of the aggregate (2) is conducted, insofar as the correlation value (K) exceeds a limit value for the displacement force, which corresponds to a specified jamming force, and whereby the correlation value (K) is filtered in a filter (140), whereby the filter (140) can be controlled using at least one related filter parameter (142, 143), **characterized in that** an alternating signal portion of the measured correlation value (K) and/or another nominal value which is proportional to it is determined, and depending on this alternating signal portion, the filter parameter (142, 143) can be controlled.

**14.** A method according to claim 13, **characterized in that** the limit frequency (fg) of the filter (140) and/or the order of the filter (140) can be controlled.

**15.** A method according to claim 13, **characterized in that** the filter parameter (142, 143) is set depending on the characterizing value (122) of the intensity of the alternating current portion, and/or on the characterizing value (103) of the intensity of the on-board network ripple, and/or on the characterizing value (102) of the rotor rotational speed (n).

**16.** A method according to either of claims 13 or 14, **characterized in that** the filter parameter (142, 143) is set in such a manner that the phase run time for low-frequency signal portions of the motor current signal (101) are as low as possible, and here, interfering alternating portions in the motor current signal (101) are weakened to the extent that they do not have an interfering effect when subsequently determining the displacement force.

**17.** A method according to any one of claims 13 to 15, **characterized in that** in order to determine the characterizing value (122) of the intensity of the alternating current portion, the amplitude or the capacity of the output signal of the alternating signal filter (110) is used.

**18.** A method according to any one of claims 13 to 17, **characterized in that** in order to determine the characterizing value (103) of the intensity of the on-board network ripple, the amplitude or the capacity of the output signal of an alternating voltage filter (210) is used.

**19.** A method according to any one of claims 13 to 18, **characterized in that** the vehicle speed is used for generating a characterizing value (103) of the intensity of the on-board network ripple.

**20.** A method according to any one of claims 13 to 19, **characterized in that** the state of the ignition of the vehicle and/or the presence of the ignition key in the ignition lock is used in order to generate a characterizing value (103) of the intensity of the on-board network ripple.

**21.** A method according to any one of claims 13 to 20, **characterized in that** the state of the drive motor of the vehicle and/or the rotational speed signal of the drive motor of the vehicle is used in order to generate a characteristic value (103) of the intensity of the on-board network ripple.

**22.** A method according to any one of claims 13 to 21, **characterized in that** the characteristic value (102) of the rotor rotational speed (n) is attained by determining the frequency of the alternating portions contained in the motor current signal (101).

**23.** A method according to any one of claims 13 to 22, **characterized in that** in order to determine the amplitude, the maximum value from a specific number of input values is determined.

**24.** A method according to any one of claims 13 to 23, **characterized in that** in order to determine the capacity, the average capacity of a specific number of input values is calculated.

**Revendications**

**1.** Disposition de circuit (SA) pour le réglage et/ou la commande électrique du mouvement d'un groupe (2) entraîné électriquement, en particulier d'un lève-vitre ou d'un toit ouvrant d'un véhicule à moteur, avec un système de protection anti-coincement sur lequel une grandeur de corrélation (K) pour la force de réglage du groupe (2) est mesurée et un arrêt ou un renversement du mouvement de réglage ont lieu, en vue de la protection anti-coincement, dans la mesure où la grandeur de corrélation (K) dépasse une valeur limite (fg), laquelle correspond à une force de coincement spécifiée, un filtre (140) pour le filtrage de la grandeur de corrélation (K) pour la force de réglage du groupe (2) étant prévu,

le filtre (140) étant commandable à l'aide d'au moins un paramètre de filtre correspondant (142, 143),

**caractérisée en ce qu'**une composante de signal alternatif de la grandeur de corrélation (K) mesurée et/ou d'une autre grandeur de corrélation lui étant proportionnelle est déterminée et le paramètre de filtre (142, 143) est commandable en fonction de cette composante de signal alternatif

2. Disposition de circuit selon la revendication 1, **caractérisée en ce que** l'intensité de la composante de courant alternatif est déterminée et en fonction de cette intensité de la composante de signal alternatif, le paramètre de filtre (142, 143) est commandable.

3. Disposition de circuit selon l'une des revendications 1 à 2, **caractérisée en ce qu'**un dispositif de filtrage (100) est prévu pour la détermination d'une composante de signal alternatif de la grandeur de corrélation (K), en particulier d'un signal de courant de moteur (I).

4. Disposition de circuit selon la revendication 3, **caractérisée en ce que** le dispositif de filtrage (100) comprend un filtre de signal alternatif (110) pour le filtrage de la composante de signal alternatif.

5. Disposition de circuit selon la revendication 4, **caractérisée en ce que** le filtre de signal alternatif (110), en particulier un filtre de signal de courant alternatif est réalisé comme dispositif de filtre passe-haut.

6. Disposition de circuit selon la revendication 4 ou 5, **caractérisée en ce que** le filtre de signal alternatif (110) est réalisé comme dispositif de filtre passe-bande.

7. Disposition de circuit selon l'une des revendications 3 à 6, **caractérisée en ce que** le dispositif de filtrage (100) comprend un autre filtre, en particulier un filtre de courant (140).

8. Disposition de circuit selon l'une des revendications 4 à 7, **caractérisée en ce que** le signal de sortie du filtre de signal alternatif (110) est amené à un indicateur d'intensité (120).

9. Disposition de circuit selon la revendication 8, **caractérisée en ce que** le signal de sortie de l'indicateur d'intensité (120) est amené à une unité de traitement (130).

10. Disposition de circuit selon la revendication 9, **caractérisée en ce qu'**un signal de régime (n, 102) du rotor est amené à l'unité de traitement (130).

11. Disposition de circuit selon la revendication 9 ou 10, **caractérisée en ce qu'**un signal (103) caractérisant l'intensité de l'ondulation du réseau de bord est amené à l'unité de traitement (130).

12. Disposition de circuit selon l'une des revendications précédentes 1 à 11, **caractérisée en ce que** la fréquence limite correspondante (fg) et/ou un ordre de filtre (140) sont commandés comme paramètres de filtre (142, 143).

13. Procédé pour l'opération d'un groupe entraîné électriquement avec une disposition de circuit (SA) selon l'une des revendications précédentes 1 à 11, une grandeur de corrélation (K) pour la force de réglage du groupe (2) étant déterminée et un arrêt ou un renversement d'un mouvement de réglage du groupe (2) a lieu en vue de la protection anti-coincement, dans la mesure où la grandeur de corrélation (K) pour la force de réglage dépasse une valeur limite, laquelle correspond à une force de coincement spécifiée, et la grandeur de corrélation (K) étant filtrée dans un filtre (140), le filtre (140) étant commandable au moyen d'au moins un paramètre de filtre (142, 143) correspondant, **caractérisé en ce qu'**

une composante de signal alternatif de la grandeur de corrélation (K) et/ou d'une autre grandeur de corrélation lui étant proportionnelle est déterminée et le paramètre de filtre (142, 143) est commandable en fonction de cette composante de signal alternatif.

14. Procédé selon la revendication 13, **caractérisé en ce que** la fréquence limite (fg) du filtre (140) et/ou l'ordre du filtre (140) sont commandables.

**15.** Procédé selon la revendication 13, **caractérisé en ce que** le paramètre de filtre (142, 143) est réglé en fonction de la grandeur (122) caractérisant l'intensité de la composante de courant alternatif, et/ou de la grandeur (103) caractérisant l'intensité de l'ondulation du réseau de bord et/ou de la grandeur (102) caractérisant le régime (n) du rotor.

**16.** Procédé selon la revendication 13 ou 14, **caractérisé en ce que** le paramètre de filtre (142, 143) est réglé de telle sorte que le délai de phase soit le plus faible possible pour des composantes de signal basse fréquence du signal de courant de moteur (101) et qu'à cette occasion, des composantes alternatives parasites sur le signal de courant de moteur (101) soient atténuées de telle sorte qu'elles n'aient pas d'effet parasite sur la détermination suivante de la force de réglage.

**17.** Procédé selon l'une des revendications 13 à 15, **caractérisé en ce que** l'amplitude ou la puissance du signal de sortie du filtre de signal alternatif (110) sont utilisées pour la détermination de la grandeur (122) caractérisant l'intensité de la composante de courant alternatif

**18.** Procédé selon l'une des revendications 13 à 17, **caractérisé en ce que** l'amplitude ou la puissance du signal de sortie d'un filtre de tension alternative (210) sont utilisées pour la détermination de la grandeur (103) caractérisant l'intensité de l'ondulation du réseau de bord.

**19.** Procédé selon l'une des revendications 13 à 18, **caractérisé en ce que** la vitesse du véhicule est utilisée pour la génération d'une grandeur (103) caractérisant l'intensité de l'ondulation du réseau de bord.

**20.** Procédé selon l'une des revendications 13 à 19, **caractérisé en ce que** l'état du contact du véhicule à moteur et/ou la présence d'une clef de contact dans la serrure de contact est utilisé(e) ou encore sont utilisés pour la génération d'une grandeur (103) caractérisant l'intensité de l'ondulation du réseau de bord.

**21.** Procédé selon l'une des revendications 13 à 20, **caractérisé en ce que** l'état du moteur d'entraînement du véhicule à moteur et/ou le signal de régime du moteur d'entraînement du véhicule à moteur est utilisé ou encore sont utilisés pour la génération d'une grandeur (103) caractérisant l'intensité de l'ondulation du réseau de bord.

**22.** Procédé selon l'une des revendications 13 à 21, **caractérisé en ce que** la grandeur (102) caractérisant le régime du rotor (n) est produite par la détermination de fréquence des composantes alternatives contenues dans le signal de courant de moteur (101).

**23.** Procédé selon l'une des revendications 13 à 22, **caractérisé en ce que** la valeur maximale parmi un certain nombre de valeurs d'entrée est déterminée pour la détermination de l'amplitude.

**24.** Procédé selon l'une des revendications 13 à 23, **caractérisé en ce que** la puissance moyennée est déterminée à partir d'un certain nombre de valeurs d'entrée pour la détermination de la puissance.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4442171 A1
- DE 10149578
- DE 19729238